# FASCICULE DE BREVET EUROPEEN

(11) **EP 1 427 933 B1**
(45) Date de publication et mention de la délivrance du brevet: **12.07.2006**
(21) Numéro de dépôt: 02779642.4
(22) Date de dépôt: 19.09.2002
(51) Int. Cl.: F02K 1/00, F02K 1/28

(54) **DISPOSITIF DE CONTROLE DE MELANGE DE JETS PROPULSIFS POUR REACTEUR D'AVION**
VORRICHTUNG ZUR STEUERUNG VON ANTRIEBSSTROMGEMISCH FÜR FLUGZEUGREAKTOR
DEVICE FOR CONTROLLING PROPULSIVE FLOW MIXTURE FOR AIRCRAFT REACTOR

(30) Priorité: 19.09.2001 FR 0112113
(43) Date de publication de la demande: 16.06.2004
(73) Titulaire: Centre National de la Recherche Scientifique (CNRS), 75794 Paris Cédex 16 (FR)
(72) Inventeur: BONNET, Jean-Paul, F-86000 Poitiers (FR); DELVILLE, Joel, F-86000 Poitiers (FR); COLLIN, Erwan, F-86800 Lavoux (FR); TENSI, Jean, F-86000 Poitiers (FR); MOREAU, Eric, 86380 Vendeuvre du Poitou (FR); TOUCHARD, Gérard, F-86550 Mignaloux Beauvoir (FR)
(74) Mandataire: Breese, Pierre
(86) Numéro de dépôt international: PCT/FR2002/003212
(87) Numéro de publication internationale: WO 2003/025377

(56) Documents cités:
- DE-B- 1 025 731
- FR-A- 2 578 293
- US-A- 2 763 125
- US-A- 3 095 163
- US-A- 5 752 381
- US-A- 5 758 823
- US-A- 5 957 413
- US-A- 6 112 513
- LEGER L ET AL: "Influence of a DC corona discharge on the airflow along an inclined flat plate" JOURNAL OF ELECTROSTATICS, ELSEVIER SCIENCE PUBLISHERS B.V. AMSTERDAM, NL, vol. 51-52, mai 2001 (2001-05), pages 300-306, XP004341085 ISSN: 0304-3886
- BENCHIEKH, BERA, MICHARD, SUNYACH: "Contrôle par jet pulsé de l'écoulement dans un divergent court à grand angle" COMPTES RENDUS DE L'ACAD¹MIE DES SCIENCES, vol. 328, no. 10, octobre 2000 (2000-10), pages 749-756, XP002200279

## Description

La présente invention concerne le domaine des réacteurs d'avions, et notamment des dispositifs permettant la réduction des bruits générés par les réacteurs d'avions de transport civil, la vectorisation dans le cas des avions militaires ou l'augmentation de la portance dans le cas des avions de transport civil, ainsi que la diminution de la signature infrarouge pour les avions militaires.

En effet, les nuisances sonores provenant d'un avion en phase de décollage se situent principalement au niveau du réacteur de l'avion et du jet en sortie de celui-ci. Ceci est particulièrement vrai pour les avions dont les réacteurs ne possèdent pas de forts taux de dilution, comme notamment les avions de transport supersoniques.

Dans le cas des avions militaires, la vectorisation est recherchée afin d'augmenter les efforts latéraux ou verticaux. Une augmentation de portance en transport civil peut être également envisagée afin de réduire par exemple des distances de décollage.

La présente invention se rapporte donc à un dispositif de contrôle de mélange des jets propulsifs à la sortie des réacteurs d'avions, les jets propulsifs étant composés d'un jet primaire chaud sortant de la tuyère du réacteur, et d'un flux secondaire s'écoulant entre la paroi externe de la tuyère et la paroi interne du réacteur.

On connaît de l'art antérieur des méthodes passives consistant en une modification de la géométrie de la lèvre du jet à manipuler. Ces dispositifs, tels que les mélangeurs à lobes et les volets miniatures, sont cependant très difficilement amovibles dans un moteur à cycle variable.

Parmi les méthodes actives de contrôle du mélange adaptées aux jets supersoniques, on trouve les actionneurs pneumatiques ou mécaniques. Cependant, la région de réceptivité maximale étant située à la lèvre de sortie du jet, les échelles caractéristiques de l'écoulement sont donc très petites et à très hautes fréquences. Ces contraintes, ajoutées au fait que la région concernée est difficilement accessible dans le cas des réacteurs d'avions commerciaux font que de tels dispositifs de contrôle de jets sont mal adaptés à une mise en oeuvre in situ.

On connaît également de l'art antérieur une tuyère découpée en « chevrons » laquelle est destinée à mélanger le flux chaud et le flux froid pour réduire le bruit. Si un tel système présente l'avantage de ne pas alourdir le moteur, il présente cependant l'inconvénient de ne pas s'adapter à différents régimes ou modes de fonctionnement (vectorisation, signature infrarouge, bruit).

Un dispositif de contrôle de mélange d'un jet propulsif pour réacteur d'avion selon l'art antérieur est montré dans le document US 5957413.

La présente invention entend donc remédier aux inconvénients de l'art antérieur en proposant un dispositif de contrôle du mélange des jets par pilotage du décollement du jet primaire généré par la divergence brusque des parois de la tuyère, utilisant ainsi le contrôle des décollements comme méthode d'excitation des couches de mélange.

Pour ce faire, la présente invention est du type décrit ci-dessus, et elle est remarquable, dans son acception la plus large, en ce que la paroi de la tuyère présente un bord de fuite divergent de manière à générer les conditions d'un décollement du jet primaire proche d'une valeur limite d'existence et en ce que le dispositif comporte des moyens de pilotage du décollement du jet primaire, lesquels permettent de contrôler le passage du jet primaire d'un état décollé à un état recollé, et inversement.

De préférence, le pilotage du décollement du jet primaire est périodique et, dans un mode de réalisation préféré de l'invention, présente une fréquence comprise entre 50 Hz et 10 KHz.

Avantageusement, le pilotage du décollement du jet primaire est réalisé au niveau du bord de fuite, le bord de fuite présentant un angle compris entre 10° et 30° avec la paroi de la tuyère, de manière à générer un faible décollement du jet primaire.

Ainsi, en succédant les moments où l'écoulement est décollé et ceux où l'écoulement est recollé, on réalise une excitation importante des jets immédiatement au niveau du bord de fuite, région d'efficacité maximale pour ce type d'écoulement.

Selon un premier mode de réalisation de l'invention, les moyens de pilotage du décollement du jet primaire sont constitués au moins d'un jet synthétique, lequel est généré par l'intermédiaire d'une fente située dans la paroi de la tuyère et par un actionneur piézo-électrique disposé dans une cavité située à l'intérieur de la paroi de la tuyère.

Selon un second mode de réalisation de l'invention, les moyens de pilotage du décollement du jet primaire sont constitués au moins d'un jet synthétique généré par une fente située dans la paroi de la tuyère et par un générateur de pression disposé dans une cavité située à l'intérieur de la paroi de la tuyère.

Selon un troisième mode de réalisation de l'invention, les moyens de pilotage du décollement du jet primaire sont constitués au moins d'un actionneur piézo-électrique disposé sur la paroi de la tuyère.

Selon un autre mode de réalisation de l'invention, les moyens de pilotage du décollement du jet primaire sont constitués au moins de deux électrodes disposées sur la paroi de la tuyère afin de créer une décharge électrique de type effet couronne, et ainsi exempter les contraintes thermomécaniques liées à la nature de l'écoulement.

Selon un dernier mode réalisation de l'invention, les moyens de pilotage du décollement du jet primaire sont constitués au moins d'un générateur de pression disposé sur la paroi de la tuyère.

L'utilisation de commandes électriques permet ainsi de ne pas apporter un surpoids au réacteur. Un autre avantage est de pouvoir être associé à l'électronique embarquée, et ainsi de pouvoir contrôler les moyens de pilotage du décollement du jet primaire, à savoir soit activer ou désactiver le pilotage du décollement du jet primaire, soit l'adapter selon le régime du moteur.

Dans le cas des trois derniers modes de réalisation de l'invention, les moyens de pilotage sont disposés soit sur toute ou une partie de la circonférence de la paroi interne de la tuyère, soit sur toute ou une partie de la circonférence de la paroi externe de la tuyère, soit sur toute ou une partie de la circonférence de la paroi interne et externe de la tuyère.

Avantageusement, le pilotage du décollement du jet primaire est réalisé de manière à générer soit un écoulement symétrique, soit un écoulement antisymétrique à la sortie du réacteur.

De cette manière, pour un écoulement symétrique, le pilotage du décollement du jet primaire a lieu sur la totalité de la face de sortie du jet, permettant ainsi la réduction du bruit et la signature infrarouge. Pour un écoulement antisymétrique, le pilotage de décollement du jet primaire a lieu sur une partie seulement de la face de sortie du jet, permettant alors de jouer sur la directivité du jet et la vectorisation des efforts.

Le dispositif selon l'invention associe donc la divergence dudit bord de fuite pour créer un décollement naturel du jet primaire sortant de la tuyère et des moyens de pilotage du décollement du jet primaire.

Dans cette configuration de l'invention, les parois de la tuyère sont relativement épaisses. Afin d'adapter ce dispositif à des parois minces, ladite paroi est avantageusement configurée de manière à présenter une convergence en amont dudit bord de fuite.

On comprendra mieux l'invention à l'aide de la description, faite ci-après à titre purement explicatif, de différents modes de réalisation de l'invention, en référence aux figures annexées :
- la figure 1 illustre une vue partielle en coupe d'une tuyère munie du dispositif selon l'invention disposé sur la paroi interne de la tuyère en amont du bord de fuite ;
- la figure 2 illustre une vue partielle en coupe d'une tuyère munie d'une variante du dispositif constituée d'électrodes disposées selon une première configuration ;
- la figure 3 illustre une vue partielle en coupe d'une tuyère munie d'une variante du dispositif constituée d'électrodes disposées selon une seconde configuration ;
- la figure 4 illustre une vue schématique de l'écoulement du jet primaire lorsque les moyens de pilotage du décollement du jet primaire ne sont pas activés (cas du passage d'un état décollé à un état recollé) ;
- la figure 5 illustre une vue schématique de l'écoulement du jet primaire lorsque les moyens de pilotage du décollement du jet primaire sont activés (cas du passage d'un état décollé à un état recollé) ;
- la figure 6 illustre une vue en perspective d'une tuyère munie du dispositif selon l'invention ;
- la figure 7 illustre une vue en perspective de la tuyère munie d'une variante du dispositif selon l'invention ;
- la figure 8 illustre l'utilisation du dispositif selon l'invention sur une tuyère découpée en « chevrons » ;
- La figure 9 illustre une vue partielle en coupe d'une tuyère à parois minces présentant un contrôle du décollement mono-face ; et
- La figure 10 illustre une vue partielle en coupe de la tuyère représentée en figure 9, présentant un contrôle du décollement bi-face.

L'invention concerne un dispositif de contrôle de mélange de jets propulsifs (8, 9) à la sortie d'un réacteur d'avion, lesdits jets propulsifs (8, 9) étant composés d'un jet primaire chaud (8) sortant d'une tuyère (1) dudit réacteur, et d'un flux secondaire (9) s'écoulant entre la paroi externe (2a) de ladite tuyère (1) et la paroi interne dudit réacteur.

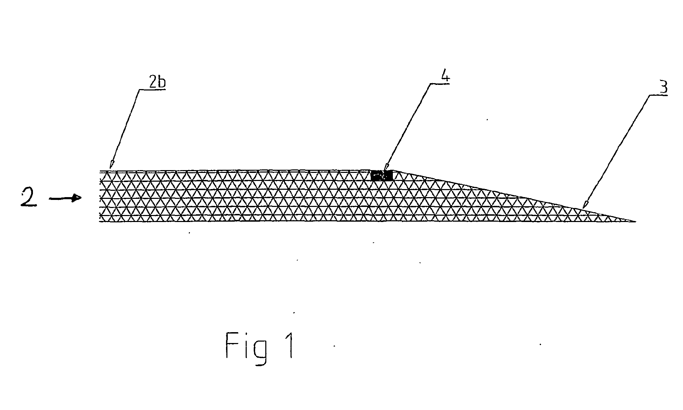

La paroi (2) de ladite tuyère (1) munie du dispositif selon l'invention, illustrée figure 1, est constituée à sa sortie d'un bord de fuite (3), lequel présente un angle avec la paroi (2) de ladite tuyère (1) compris entre 10° et 30° de manière à générer un décollement dudit jet primaire (8). Des moyens de pilotage (4) du décollement dudit jet primaire (8), lesquels sont destinés à contrôler le passage dudit jet primaire (8) d'un état décollé à un état recollé, et inversement, sont disposés sur la paroi interne (2b) de ladite tuyère (1) au niveau dudit bord de fuite (3), et plus particulièrement en amont dudit bord de fuite (3).

Selon une première variante, les moyens de pilotage (4) du décollement dudit jet primaire (8) sont constitués au moins d'un actionneur piézo-électrique, disposé sur la paroi interne (2b) de ladite tuyère (1).

Selon une seconde variante de l'invention, les moyens de pilotage (4) du décollement dudit jet primaire (8) sont constitués au moins d'un générateur de pression disposé sur la paroi interne (2b) de ladite tuyère (1).

Selon une troisième variante de l'invention, les moyens de pilotage (4) du décollement dudit jet primaire (8) sont constitués au moins de deux électrodes (5) disposées sur la paroi interne (2b) de ladite tuyère (1), afin de créer une décharge électrique de type effet couronne.

Selon une autre configuration de l'invention (non représentée), les moyens de pilotage (4) du décollement dudit jet primaire (8) (actionneur piézo-électrique, générateur de pression ou électrodes) peuvent être également disposés sur ledit bord de fuite (3).

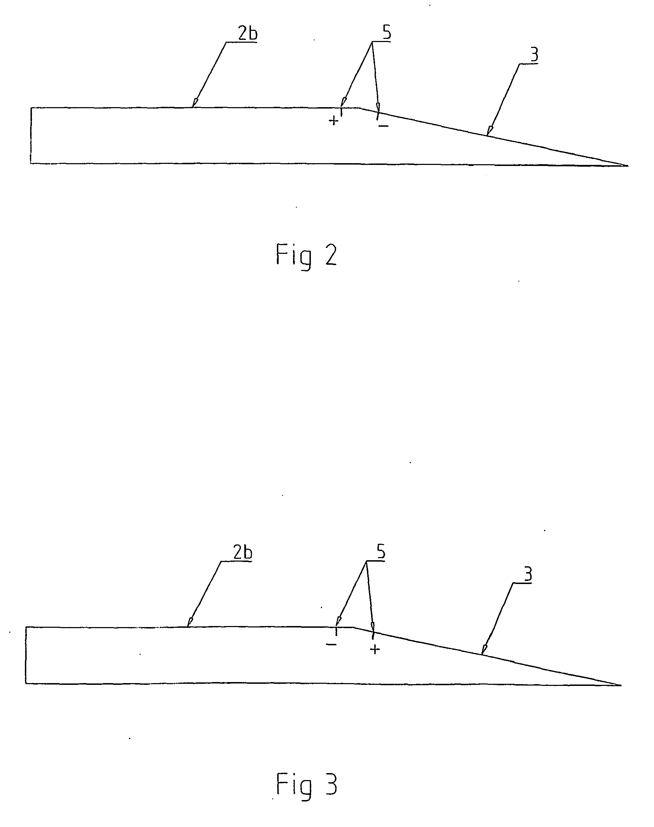

Selon une autre configuration de l'invention, illustrée figure 2, les moyens de pilotage (4) du décollement dudit jet primaire constitués d'électrodes (5) pourront être disposées au voisinage dudit bord de fuite (3) de telle sorte que l'électrode positive soit placée en amont dudit bord de fuite (3) et l'électrode négative sur ledit bord de fuite (3), espacées l'une de l'autre de 1 à 2 cm. De même, l'électrode négative sera disposée à une distance correspondant à un dixième du diamètre de la paroi (2) de ladite tuyère (1) depuis l'extrémité dudit bord de fuite (3) correspondant à la sortie de ladite tuyère (1). Les électrodes, ainsi disposées, permettront de contrôler le passage dudit jet primaire (8) d'un état décollé à un état recollé.

Inversement, comme illustré sur la figure 3, les électrodes (5) pourront être disposées au voisinage dudit bord de fuite (3) de telle sorte que l'électrode négative soit placée en amont dudit bord de fuite (3) et l'électrode positive sur ledit bord de fuite (3), espacées l'une de l'autre de 1 à 2 cm. De même, l'électrode positive sera disposée à une distance correspondant à un dixième du diamètre de la paroi (2) de ladite tuyère (1) depuis l'extrémité dudit bord de fuite (3) correspondant à la sortie de ladite tuyère (1). Les électrodes, ainsi disposées, permettront de contrôler le passage dudit jet primaire (8) d'un état collé à un état décollé.

Les figures 2 et 3 illustrent l'emplacement respectivement de l'électrode positive et de l'électrode négative immédiatement en amont dudit bord de fuite (3). Mais il est bien entendu évident que tout autre emplacement peut être envisagé, et en particulier immédiatement en aval dudit bord de fuite (3).

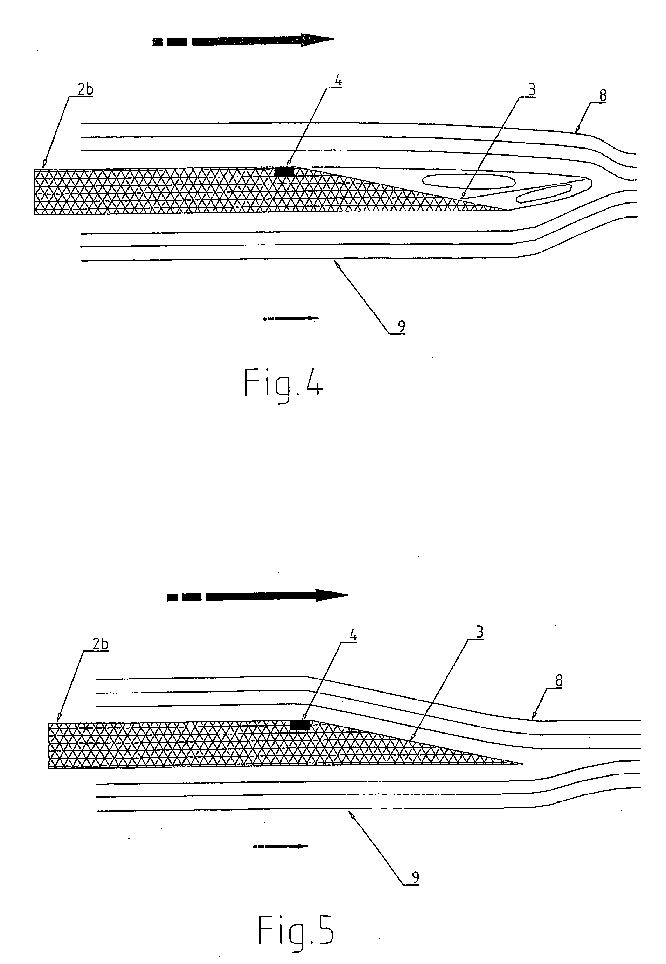

La figure 4 illustre une vue schématique de l'écoulement dudit jet primaire (8) au niveau dudit bord de fuite (3) de ladite tuyère (1) lorsque les moyens de pilotage (4) du décollement dudit jet primaire (8) ne sont pas activés.

La figure 5 illustre une vue schématique de l'écoulement dudit jet primaire (8) au niveau dudit bord de fuite (3) de ladite tuyère (1) lorsque les moyens de pilotage (4) du décollement dudit jet primaire (8) sont activés.

Ainsi, on réalise une excitation des jets au niveau dudit bord de fuite (3), en amont comme illustré sur les figures 4 et 5, ou sur ledit bord de fuite (3) (non représenté), en succédant les moments où l'écoulement est décollé et ceux où l'écoulement est recollé, par pilotage périodique du décollement dudit jet primaire (8). Dans un mode de réalisation préféré de l'invention, le pilotage du décollement présente une fréquence comprise entre 50 Hz et 10 KHz.

Dans un autre exemple de réalisation (non représenté), les moyens de pilotage (4) du décollement dudit jet primaire (8) pourront être constitués au moins d'un jet synthétique. Ledit jet synthétique sera alors généré par l'intermédiaire d'une fente située dans la paroi (2) de ladite tuyère (1) ainsi que par un actionneur piézo-électrique ou un générateur de pression, lequel sera disposé dans une cavité située à l'intérieur de la paroi (2) de ladite tuyère (1).

L'exemple illustré par les figures 4 et 5 concerne le passage dudit jet primaire (8) d'un état décollé à un état recollé, le décollement dudit jet primaire (8) étant généré naturellement par la divergence de la paroi (2) de ladite tuyère (1). Ainsi, la figure 4 illustre des moyens de pilotage (4) inactivés, et la figure 5 des moyens de pilotage (4) activés.

Plaçons-nous à présent dans le cas où ledit jet primaire (8) passe d'un état collé à un état décollé. Inversement au cas précédent, lesdits moyens de pilotage (4) sont activés pour décoller artificiellement ledit jet primaire (8) proche du décollement (figure 4), et inactivés pour permettre le recollement dudit jet primaire (8) sur la paroi (2) de ladite tuyère (1) (figure 5).

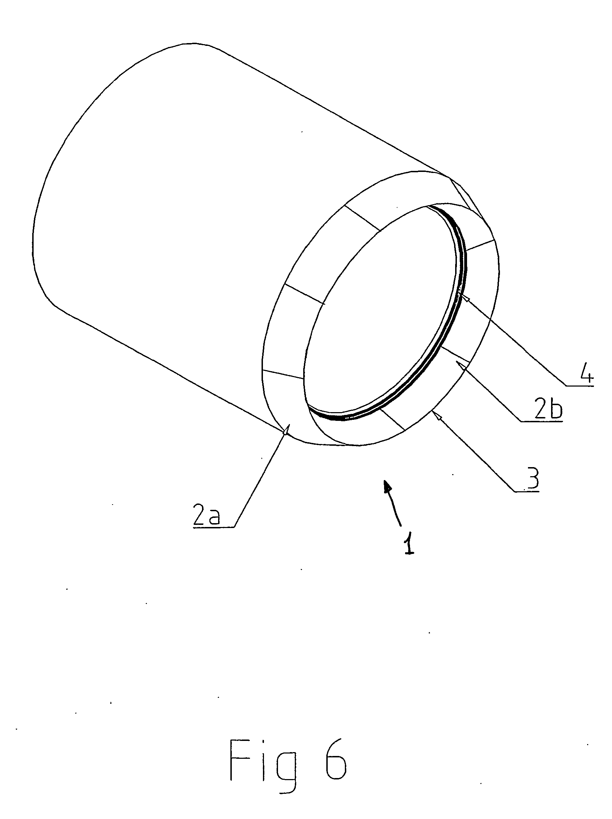

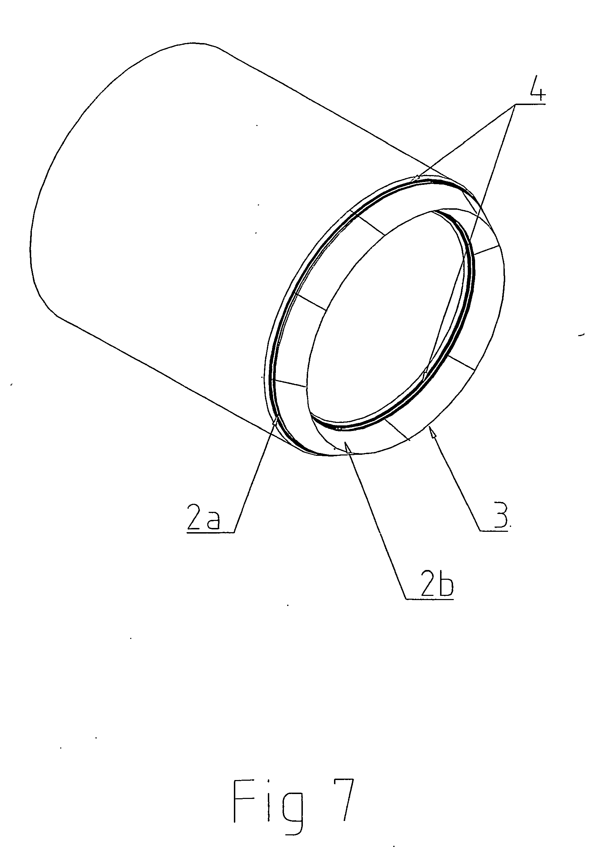

La figure 6 illustre une vue en perspective d'une tuyère (1) munie du dispositif selon l'invention. Les moyens de pilotage (4) du décollement dudit jet primaire (8) sont disposés sur l'ensemble de la paroi interne (2b) de ladite tuyère (1). Les moyens de pilotage (4) du décollement dudit jet primaire (8) peuvent être également disposés sur la paroi interne (2b) et sur la paroi externe (2a) de ladite tuyère (1), illustré figure 7.

Dans un autre mode de réalisation (non représenté), les moyens de pilotage (4) du décollement dudit jet primaire peuvent être disposés seulement sur la paroi externe (2a) de ladite tuyère.

Ainsi, la diminution du bruit et de la signature infrarouge sera réalisée par le contrôle du décollement dudit jet primaire (8) sur la totalité de la face de sortie dudit jet primaire (8).

Pour jouer sur la directivité du jet ou la vectorisation des efforts, les moyens de pilotage (4) du décollement dudit jet primaire (8) seront actionnés sur un secteur seulement de la face de sortie dudit jet primaire (8) .

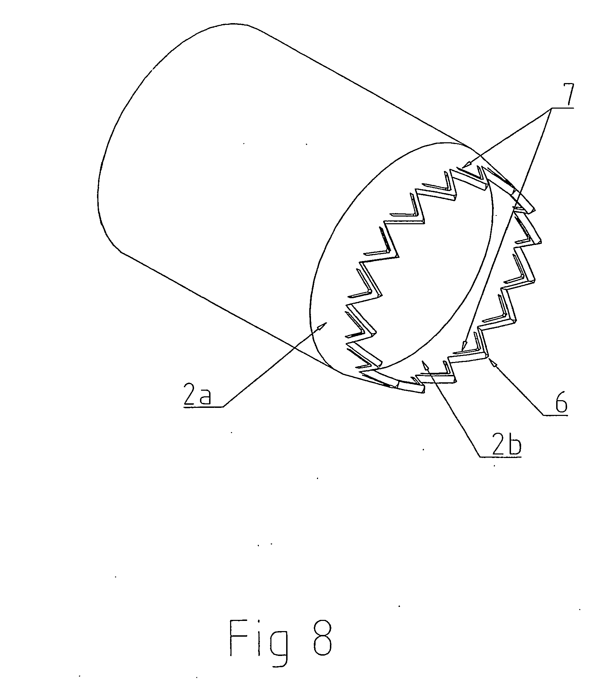

La figure 8 illustre l'application du dispositif selon l'invention sur une tuyère découpée en « chevrons ». Les moyens de pilotage (4), identiques à ceux décrits dans les figures 1 et 2, sont disposés sur la paroi interne (2b) de ladite tuyère (1) au voisinage de chacune des branches (7) formant les dents (6) de ladite tuyère (1), et sur la paroi externe (2a) de ladite tuyère (1) au voisinage de chacune des branches (7) formant les dents (6) de ladite tuyère (1).

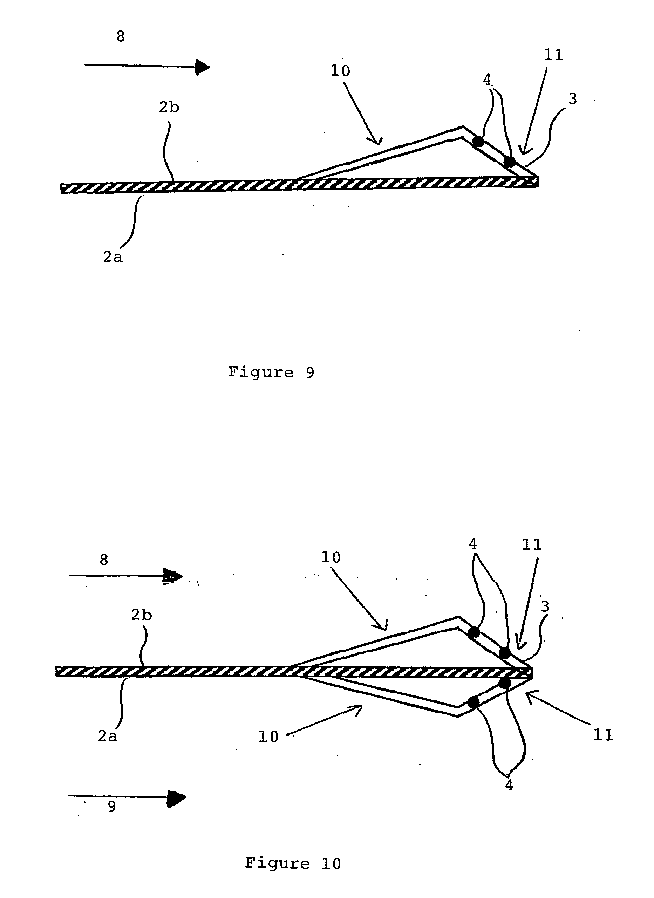

La figure 9 illustre une vue partielle en coupe d'une tuyère à parois minces présentant un contrôle du décollement mono-face.

La paroi interne (2b) de ladite tuyère (1) présente une partie convergente (10) et une partie terminale divergente (11) de manière à former un renflement à la sortie de ladite tuyère (1).

Ladite partie divergente (11) constitue ledit bord de fuite (3).

Dans cette configuration, lesdits moyens de pilotage (4) dudit jet primaire (8) sont disposés sur la partie divergente (11) de la paroi interne (2b) de ladite tuyère (1).

La figure 10 illustre ladite tuyère (1) à parois minces de la figure 9, ladite tuyère (1) étant munie d'un contrôle du décollement bi-face.

La paroi interne (2b) et la paroi externe (2a) de ladite tuyère (1) présentent respectivement, et de manière symétrique, une partie convergente (10) et une partie divergente (11).

Ainsi, la partie divergente (11) de ladite paroi interne (2b) crée un décollement naturel dudit jet primaire (8), et la partie divergente (10) de ladite paroi externe (2a) un décollement naturel dudit flux secondaire (9).

Le recollement dudit jet primaire (8) et dudit flux secondaire (9) est réalisé par lesdits moyens de pilotage (4) disposés respectivement sur les parties divergentes (11) de la paroi interne (2b) et la paroi externe (2a) de ladite tuyère (1).

L'invention est décrite dans ce qui précède à titre d'exemple. Il est entendu que l'homme du métier est à même de réaliser différentes variantes de l'invention telle que définie par les revendications.

## Revendications

1. Dispositif de contrôle de mélange de jets propulsifs (8, 9) à la sortie d'un réacteur d'avion, le dispositif comportant une tuyère (1), lesdits jets propulsifs (8, 9) étant composés d'un jet primaire chaud (8) sortant de la tuyère (1) dudit réacteur, et d'un flux secondaire (9) s'écoulant entre la paroi externe (2a) de ladite tuyère (1) et la paroi interne dudit réacteur, **caractérisé en ce que** la paroi (2) de ladite tuyère (1) présente un bord de fuite (3) divergent de manière à générer les conditions d'un décollement dudit jet primaire (8) proche d'une valeur limite d'existence et **en ce qu'**il comporte des moyens de pilotage (4) dudit jet primaire (8), lesdits moyens de pilotage (4) permettant de contrôler le passage dudit jet primaire (8) d'un état décollé à un état recollé, et inversement.

2. Dispositif selon la revendication 1, **caractérisé en ce que** le pilotage du décollement dudit jet primaire (8) est périodique.

3. Dispositif selon la revendication 2, **caractérisé en ce que** le pilotage du décollement dudit jet primaire (8) présente une fréquence comprise entre 50 Hz et 10 KHz.

4. Dispositif selon l'une quelconque des revendications 1 à 3, **caractérisé en ce que** les moyens de pilotage (4) du décollement dudit jet primaire (8) sont constitués au moins d'un jet synthétique, lequel est généré par l'intermédiaire d'une fente située dans la paroi (2) de ladite tuyère (1) et par un actionneur piézo-électrique disposé dans une cavité située à l'intérieur de la paroi de ladite tuyère (1).

5. Dispositif selon l'une quelconque des revendications 1 à 3, **caractérisé en ce que** les moyens de pilotage (4) du décollement dudit jet primaire sont constitués au moins d'un jet synthétique, lequel est généré par l'intermédiaire d'une fente située dans la paroi (2) de ladite tuyère (1) et par un générateur de pression disposé dans une cavité située à l'intérieur de la paroi (2) de ladite tuyère (1).

6. Dispositif selon l'une quelconque des revendications 1 à 3, **caractérisé en ce que** les moyens de pilotage (4) du décollement dudit jet primaire (8) sont constitués au moins d'un actionneur piézo-électrique disposé sur la paroi (2) de ladite tuyère (1).

7. Dispositif selon l'une quelconque des revendications 1 à 3, **caractérisé en ce que** les moyens de pilotage (4) du décollement dudit jet primaire (8) sont constitués au moins de deux électrodes (5) disposées sur la paroi (2) de ladite tuyère (1) afin de créer une décharge électrique de type effet couronne.

8. Dispositif selon l'une quelconque des revendications 1 à 3, **caractérisé en ce que** les moyens de pilotage (4) du décollement dudit jet primaire (8) est obtenu au moyen au moins d'un générateur de pression disposé sur la paroi (2) de ladite tuyère (1).

9. Dispositif selon l'une quelconque des revendications 1 à 8, **caractérisé en ce que** les moyens depilotage (4) sont disposés sur toute ou une partie de lacirconférence de la paroi interne (2b) de ladite tuyère (1).

10. Dispositif selon l'une quelconque des revendications 1 à 9, **caractérisé en ce que** les moyens de pilotage (4) sont disposés sur toute ou une partie de la circonférence de la paroi externe (2a) de ladite tuyère (1).

11. Dispositif selon l'une quelconque des revendications précédentes, **caractérisé en ce que** le pilotage du décollement dudit jet primaire est réalisé au niveau dudit bord de fuite (3).

12. Dispositif selon l'une quelconque des revendications précédentes, **caractérisé en ce que** le pilotage du décollement dudit jet primaire est réalisé de manière à générer soit un écoulement symétrique, soit un écoulement antisymétrique à la sortie dudit réacteur.

13. Dispositif selon l'une quelconque des revendications précédentes, **caractérisé en ce que** le bord de fuite (3) présente un angle avec la paroi (2) de ladite tuyère (1) compris entre 10° et 30°.

14. Dispositif selon l'une quelconque des revendications précédentes, **caractérisé en ce que** la paroi (2) de ladite tuyère (1) est convergente en amont dudit bord de fuite (3).

15. Réacteur d'avion comprenant un dispositif de contrôle de mélange de jets propulsifs selon l'une quelconque des revendications précédentes.

## Claims

1. Device for controlling the mix of propulsion jets (8, 9) at the output of an airplane jet engine, the device comprising an exhaust nozzle (1), said propulsion jets (8, 9) consisting of a hot primary jet (8) coming from the exhaust nozzle (1) of said jet engine, and a secondary flow (9) that flows between the outer wall (2a) of said exhaust nozzle (1) and the inner wall of said jet engine, **characterised in that** the wall (2) of said exhaust nozzle (1) has a divergent trailing edge (3) in order to generate the conditions for said primary jet (8) to separate close to an existence limit value, and **in that** it comprises means (4) for controlling said primary jet (8), said controlling means (4) making it possible to control the shift of said primary jet (8) from an separated state to a reattached state, and vice-versa.

2. Device according to claim 1, **characterised in that** the control of the separation of said primary jet (8) is periodic.

3. Device according to claim 2, **characterised in that** the control of the separation of said primary jet (8) has a frequency comprised between 50 Hz and 10 KHz.

4. Device according to any one of the claims from 1 to 3, **characterised in that** the means (4) for controlling the separation of said primary jet (8) comprise at least one synthetic jet, which is generated by means of a slot located in the wall (2) of said exhaust nozzle (1) and by a piezoelectric actuator placed in a cavity located inside the wall of said exhaust nozzle (1).

5. Device according to any one of the claims from 1 to 3, **characterised in that** the means (4) for controlling said primary jet comprise at least one synthetic jet, which is generated by means of a slot made in the wall (2) of said exhaust nozzle (1) and by a pressure generator placed in a cavity located inside the wall (2) of said exhaust nozzle (1).

6. Device according to any one of the claims from 1 to 3, **characterised in that** the means (4) for controlling the separation of said primary jet (8) comprise at least one piezoelectric actuator arranged on the wall (2) of said exhaust nozzle (1).

7. Device according to any one of the claims from 1 to 3, **characterised in that** the means (4) for controlling the separation of the primary jet (8) comprise at least two electrodes (5) arranged on the wall (2) of said exhaust nozzle (1) in order to create an electrical discharge with a corona effect.

8. Device according to any one of the claims from 1 to 3, **characterised in that** the means (4) for controlling the separation of the primary jet (8) are obtained by means of at least one pressure generator arranged on the wall (2) of said exhaust nozzle (1).

9. Device according to any one of the claims from 1 to 8, **characterised in that** the control means (4) are placed on all or part of the circumference of the inner wall (2b) of said exhaust nozzle (1).

10. Device according to any one of the claims from 1 to 9, **characterised in that** the control means (4) are placed on all or part of the circumference of the outer wall (2a) of said exhaust nozzle (1).

11. Device according to any one of the preceding claims, **characterised in that** the control of the separation of the primary jet is carried out at said trailing edge (3).

12. Device according to any of the preceding claims, **characterised in that** the control of the separation of said primary jet is carried out in order to create either a symmetric flow or an asymmetric flow at the output of said jet engine.

13. Device according to any one of the preceding claims, **characterised in that** the trailing edge (3) is at an angle in relation to the wall (2) of said exhaust nozzle (1) comprised between 10° and 30°.

14. Device according to any one of the preceding claims, **characterised in that** the wall (2) of said exhaust nozzle (1) is convergent upstream from said trailing edge (3).

15. Airplane jet engine comprising a device for controlling the mix of propulsion jets according to any one of the preceding claims.

## Patentansprüche

1. Vorrichtung zur Mischungskontrolle von Treibstrahlen (8, 9) am Ausgang eines Flugzeugreaktors, welche Vorrichtung eine Düse (1) enthält, wobei die besagten Treibstrahle (8, 9) aus einem heißen Primärstrahl (8) bestehen, der aus der Düse (1) des besagten Reaktors austritt, und aus einem Sekundärstrahl (9), der zwischen der Außenwand (2a) der besagten Düse (1) und der Innenwand des besagten Reaktors abfließt, **dadurch gekennzeichnet, daß** die Wand (2) der besagten Düse (1) eine divergente Austrittskante (3) aufweist, so daß die Bedingungen eines Abhebens des besagten Primärstrahls (8) in Nähe eines Existenzgrenzwerts generiert werden, und **dadurch**, daß er Steuerungsmittel (4) des besagten Primärstrahls (8) umfaßt, wobei die besagten Steuerungsmittel (4) ermöglichen, den Durchgang des besagten Primärstrahls (8) von einem abgehobenen Zustand bis zu einem wieder befestigten Zustand zu steuern und umgekehrt.

2. Vorrichtung nach Anspruch 1, **dadurch gekennzeichnet, daß** die Steuerung des Abhebens des besagten Primärstrahls (8) periodisch ist.

3. Vorrichtung nach Anspruch 2, **dadurch gekennzeichnet, daß** die Steuerung des Abhebens des besagten Primärstrahls (8) eine Frequenz von zwischen 50 Hz und 10 Hz aufweist.

4. Vorrichtung nach einem beliebigen der Ansprüche 1 bis 3, **dadurch gekennzeichnet, daß** die Steuerungsmittel (4) des Abhebens des besagten Primärstrahls (8) aus mindestens einem synthetischen Strahl bestehen, der vermittels eines Schlitzes in der Wand (2) der besagten Düse (1) generiert wird, und durch ein piezoelektrisches Wirkglied in einer Aushöhlung innerhalb der Wand der besagten Düse (1).

5. Vorrichtung nach einem beliebigen der Ansprüche 1 bis 3, **dadurch gekennzeichnet, daß** die Steuerungsmittel (4) des Abhebens des besagten Primärstrahls aus mindestens einem synthetischen Strahl bestehen, der vermittels eines Schlitzes in der Wand (2) der besagten Düse (1) generiert wird, und durch einen Druckgenerator in einer Aushöhlung innerhalb der Wand (2) der besagten Düse (1).

6. Vorrichtung nach einem beliebigen der Ansprüche 1 bis 3, **dadurch gekennzeichnet, daß** die Steuerungsmittel (4) des Abhebens des besagten Primärstrahls (8) aus mindestens einem piezoelektrischen Wirkglied bestehen, das auf der Wand (2) der besagten Düse (1) angeordnet ist.

7. Vorrichtung nach einem beliebigen der Ansprüche 1 bis 3, **dadurch gekennzeichnet, daß** die Steuerungsmittel (4) des Abhebens des besagten Primärstrahls (8) aus mindestens zwei Elektroden (5) bestehen, die auf der Wand (2) der besagten Düse (1) angeordnet sind, um eine elektrische Entladung von der Art Koronaeffekt zu schaffen.

8. Vorrichtung nach einem beliebigen der Ansprüche 1 bis 3, **dadurch gekennzeichnet, daß** die Steuerungsmittel (4) des Abhebens des besagten Primärstrahls (8) vermittels mindestens eines Druckgenerators erzielt werden, der auf der Wand (2) der besagten Düse (1) angeordnet ist.

9. Vorrichtung nach einem beliebigen der Ansprüche 1 bis 8, **dadurch gekennzeichnet, daß** die Steuerungsmittel (4) auf der gesamten oder einem Teil des Umfangs der Innenwand (2b) der besagten Düse (1) angeordnet sind.

10. Vorrichtung nach einem beliebigen der Ansprüche 1 bis 9, **dadurch gekennzeichnet, daß** die Steuerungsmittel (4) auf der gesamten oder einem Teil des Umfangs der Außenwand (2a) der besagten Düse (1) angeordnet sind.

11. Vorrichtung nach einem beliebigen der vorstehenden Ansprüche, **dadurch gekennzeichnet, daß** die Steuerung des Abhebens des besagten Primärstrahls an der besagten Austrittskante (3) durchgeführt wird.

12. Vorrichtung nach einem beliebigen der vorstehenden Ansprüche, **dadurch gekennzeichnet, daß** die Steuerung des Abhebens des besagten Primärstrahls so durchgeführt wird, daß entweder ein symmetrischer Abfluß oder ein schiefsymmetrischer Abfluß am Ausgang des besagten Reaktors generiert wird.

13. Vorrichtung nach einem beliebigen der vorstehenden Ansprüche, **dadurch gekennzeichnet, daß** die Austrittskante (3) einen Winkel mit der Wand (2) der besagten Düse (1) von zwischen 10° et 30° bildet.

14. Vorrichtung nach einem beliebigen der vorstehenden Ansprüche, **dadurch gekennzeichnet, daß** die Wand (2) der besagten Düse (1) vor der besagten Austrittskante (3) konvergent ist.

15. Flugzeugreaktor mit einer Vorrichtung für die Mischungskontrolle von Treibstrahlen nach einem beliebigen der vorstehenden Ansprüche.
